# EUROPÄISCHE PATENTSCHRIFT

(11) **EP 3 478 535 B1**
(45) Veröffentlichungstag und Bekanntmachung des Hinweises auf die Patenterteilung: **18.11.2020**
(21) Anmeldenummer: 17777799.2
(22) Anmeldetag: 14.09.2017
(51) Int. Cl.: G06K 9/00, G07C 9/00, G08G 1/0967, B60W 60/00, G06F 3/01

(54) **VERFAHREN ZUM BETRIEB EINES KRAFTFAHRZEUGS**
METHOD FOR OPERATING A MOTOR VEHICLE
PROCÉDÉ PERMETTANT DE FAIRE FONCTIONNER UN VÉHICULE AUTOMOBILE

(30) Priorität: 16.09.2016 DE 102016217770
(43) Veröffentlichungstag der Anmeldung: 08.05.2019
(73) Patentinhaber: Audi AG, 85045 Ingolstadt (DE)
(72) Erfinder: ENTHALER, Achim, 85049 Ingolstadt (DE); MÜRKEN, Michael, 75196 Remchingen (DE); THANHEISER, Andreas, 85072 Eichstätt (DE); KRAMMER, Johann, 86556 Kühbach (DE)
(86) Internationale Anmeldenummer: PCT/EP2017/073093
(87) Internationale Veröffentlichungsnummer: WO 2018/050729

(56) Entgegenhaltungen:
- DE-A1-102012 017 934
- DE-A1-102014 111 023
- US-A1- 2006 136 846
- US-A1- 2010 235 034
- US-A1- 2015 081 169
- US-A1- 2016 167 648

## Beschreibung

Die Erfindung betrifft ein Verfahren zum Betrieb eines Kraftfahrzeugs umfassend eine das Fahrzeugvorfeld aufnehmende Kameraeinrichtung mit zugeordneter Steuerungseinrichtung zum Auswerten der Bilder.

Die Entwicklung von immer mehr Aufgaben eigenständig übernehmenden Kraftfahrzeugen nimmt stetig zu. Es sind bereits Fahrzeuge bekannt, die weitgehend selbständig fahren, also selbstfahrende oder pilotierte Kraftfahrzeuge, in denen ein Fahrer lediglich noch anwesend sein muss, um im Notfall die Kontrolle über das Fahrzeug selbst zu übernehmen, oder die auch ohne anwesenden Fahrer völlig selbständig am Verkehr teilnehmen. Solche weitgehend oder vollständig selbstfahrende Kraftfahrzeuge können beispielsweise als eine Art Taxi oder Ähnliches, der Personenbeförderung dienende Fahrzeuge eingesetzt werden.

Bei bisher üblichen Taxis oder dergleichen, die als konventionelle Kraftfahrzeuge ausgebildet sind und über einen Fahrer verfügen, ist es oft der Fall, dass das Taxi fährt, beispielsweise um zu einem Taxistand zu gelangen. Steht ein Fahrgast am Straßenrand und sieht er das herannahende Taxi, so winkt er üblicherweise, gibt also eine Handgeste, die der Fahrer sieht, woraufhin das Taxi anhält, um die Person aufzunehmen. Auch ein beispielsweise an einer Ampel stehendes Taxi kann auf diese Weise gerufen werden. Bei einem selbstfahrenden Kraftfahrzeug, das wie beschrieben keinen Fahrer an Bord hat, fällt der Mensch zum Erkennen der Rufgeste aus.

Aber auch bei konventionellen Taxis mit Fahrer besteht mitunter das Problem, dass der Fahrer die am Straßenrand stehende, winkende Person nicht erkennt, mithin also den Anhaltewunsch nicht erfasst und folglich die Person nicht aufnehmen kann.

Aus US 2015/0279131 A1 ist bekannt, ein fahrerloses Fahrzeug mit Hilfe einer Sendeeinrichtung, die von einer Person bewegt wird, zu rufen. Die Sendeeinrichtung veranlasst das Aussenden eines entsprechenden Steuersignals an das Kraftfahrzeug, wenn die Sendeeinrichtung von der sie tragenden Person hinreichend stark bewegt wird. Das Fahrzeug kann sodann automatisch zu der Person fahren.

Aus US 2015/0339928 A1, ähnlich wie auch aus DE 10 2015 219 463 A1, ist bekannt, unter Verwendung eines Mobilfunkgeräts wie beispielsweise einem Mobiltelefon, z. B. über eine darauf abgelegte Applikation, ein autonom fahrendes Kraftfahrzeug zu rufen.

Verfahren nach dem Oberbegriff des Anspruchs 1 sind bekannt aus US 2016/167648 A1, US 2010/235034 A1, DE 10 2014 111023 A1, und DE 10 2012 017934 A1.

Der Erfindung liegt damit das Problem zugrunde, ein demgegenüber verbessertes Verfahren zum Betrieb eines Kraftfahrzeugs anzugeben.

Zur Lösung dieses Problems ist bei einem Verfahren der eingangs genannten Art erfindungsgemäß vorgesehen, dass die Steuerungseinrichtung die Bilder zum Erfassen wenigstens einer von einer in den Bildern gezeigten Person durchgeführten Handbewegung auswertet, wobei bei Erfassen einer Handbewegung, die eine einen Anhaltewunsch anzeigende Geste beschreibt, entweder das selbstfahrende Kraftfahrzeug zum Anhalten in der Nähe der Person gesteuert wird, oder dem Fahrer des Kraftfahrzeugs ein den Anhaltewunsch signalisierendes Signal gegeben wird.

Erfindungsgemäß erfolgt über die Kameraeinrichtung eine kontinuierliche Erfassung des Fahrzeugvorfelds. Eine Steuerungseinrichtung wertet kontinuierlich die erfassten Bilder dahingehend aus, ob in den Bildern eine Person gezeigt ist. Wird eine solche Person erfasst, so wird ausgewertet, ob diese Person eine Handbewegung durchführt, also eine Geste gibt, die als einen Anhaltewunsch anzeigende Geste beurteilt werden kann. Es wird also über die Steuerungseinrichtung eine Bildauswertung dahingehend vorgenommen, ob sich in der Fahrzeugumgebung eine Person befindet, die durch Winken oder eine ähnliche definierte Geste signalisiert, dass sie von dem Kraftfahrzeug mitgenommen werden möchte.

Je nach Ausgestaltung des Kraftfahrzeugs, ob es sich also um ein selbstfahrendes Kraftfahrzeug handelt oder ob es ein Fahrzeug mit einem Fahrer ist, gestaltet sich das weitere Verfahren unterschiedlich. Handelt es sich um ein selbstfahrendes Fahrzeug ohne Fahrer, so wird nach Erfassen der den Anhaltewunsch anzeigende Geste das selbstfahrende Kraftfahrzeug automatisch in die Nähe der Person gesteuert und angehalten, so dass die Person einsteigen kann. Es ist also ein vollautomatischer Betrieb zum Erfassen eines Mitfahrerwunschs und zum Ansteuern des Fahrzeugs zu einer solchen Person, um diese aufzunehmen, vorgesehen.

Ist das Kraftfahrzeug ein konventionelles Kraftfahrzeug mit Fahrer, so wird dem Fahrer ein entsprechendes, den Anhaltewunsch signalisierendes Signal gegeben, beispielsweise ein optisches Signal durch Blinken oder eine Anzeige in einem Display, ein akustisches Signal, beispielsweise in Form einer Sprachausgabe, oder ein haptisches Signal, gegebenenfalls auch mehrere verschiedene Signale gleichzeitig. Der Fahrer kann daraufhin das Fahrzeug gezielt anhalten, sobald er die winkende Person, die er vorher gegebenenfalls übersehen hat, erfasst hat.

Das heißt, dass durch die erfindungsgemäße Erfassung des Mitfahrerwunschs und die entsprechende Steuerung des Fahrzeugs respektive die Ausgabe des Signals sichergestellt wird, dass allein durch Erfassen einer Handbewegung respektive einer Geste ein entsprechender Mitfahrerwunsch erfasst wird und das Fahrzeug entsprechend gesteuert werden kann.

In jedem Fall kann an die Person eine optische oder akustische Rückmeldung, dass der Haltewunsch erkannt wurde, gegeben werden, z. B. durch Einschalten der Beleuchtung oder eines Taxischilds, eine Nachricht an einem Display oder dergleichen.

Die Handbewegung kann über die Steuerungseinrichtung erfasst werden und beispielsweise mit vorab in einem Gesten- oder Bewegungspool definierten Gesten- oder Vergleichsmustern, die seitens des Kraftfahrzeugs auch zuvor gelernt werden können, verglichen werden. Stellt sich heraus, dass die gegebene Handgeste einem Vergleichsmuster entspricht, kann daraus ein Mitfahrwunsch abgeleitet werden. Stellt sich heraus, dass die Geste nicht zu den Gesten- oder Vergleichsmustern passt, so wird die erfasste Handbewegung nicht als Geste, die einen Anhaltewunsch anzeigt, gewertet und verworfen. Der Musterpool kann z. B. regional unterschiedlich ausgelegt sein, also an z. B. europäischen oder nordamerikanischen Verhaltensweisen angepasst sein.

Das erfindungsgemäße Verfahren lässt also eine Gestenerfassung, die ein Anhalten signalisiert, zu. Um den konkreten Anhaltewunsch noch weiter zu verifizieren, kann gemäß einer vorteilhaften Weiterbildung der Erfindung die Steuerungseinrichtung ferner die Bilder zum Erfassen der Blickrichtung der Person auswerten, wobei das Kraftfahrzeug zum Anhalten in der Nähe der Person gesteuert wird, wenn die Blickrichtung einer definierten Blickrichtung entspricht. Demgemäß wird folglich nicht nur die Handgeste erfasst und ausgewertet, sondern auch die Blickrichtung. Denn es ist davon auszugehen, dass die Person, die dem Kraftfahrzeug "winkt", auch in dessen Richtung blickt. Die Kamera respektive Steuerungseinrichtung ist nun in der Lage, die Blickrichtung anhand der Kopfposition respektive Augenposition zu erfassen. Ist diese auf das Kraftfahrzeug gerichtet, so entspricht dies beispielsweise einer vorab definierten Blickrichtung, die parallel erfasste Handgeste wird folglich hierüber als eine "Anhaltegeste" verifiziert. Schaut die Person jedoch in eine andere Richtung, so handelt es sich bei der Handbewegung offensichtlich nicht zwingend um eine einen Anhaltewunsch anzeigende Bewegung oder sie ist nicht auf das Kraftfahrzeug bezogen, sondern möglicherweise auf ein anderes, so dass aufgrund der negativen Blickrichtungserfassung die Handbewegung verworfen wird.

Denkbar ist es dabei ferner, über die Steuerungseinrichtung die erfasste Handbewegung zu klassifizieren, wobei die Handbewegung in Abhängigkeit der Klassifizierung berücksichtigt oder verworfen wird. Hierüber kann die Handbewegung quasi in ein Klassifizierungsraster eingruppiert werden, über das sie hinsichtlich der Eindeutigkeit, dass die Bewegung einen Anhaltewunsch andeutet, näher qualifiziert werden kann. Es kann darüber also eine Festlegung erfolgen, wie sicher oder unsicher der Anhaltewunsch ermittelt wurde. Über diese Klassifizierung können auch Handbewegungen, die eher abfällige Gesten darstellen, ausgeschlossen werden und als nicht zum Anhalten führende Handbewegungen verworfen werden.

Mitunter rufen oder pfeifen Personen, die ein Kraftfahrzeug, beispielsweise ein Taxi, anhalten möchten, auch. Demgemäß kann beispielsweise über ein kraftfahrzeugseitiges Mikrofon ein etwaiges Ruf- oder Pfeifgeräusch der Person erfasst werden und seitens der Steuerungseinrichtung ausgewertet werden und bei der Steuerung des Fahrbetriebs berücksichtigt werden. Es werden also in diesem Fall nicht nur kamerabasierte Daten ausgewertet, sondern auch akustische Daten, die über das Mikrofon erfasst werden. Zur Auswertung von Rufen ist die Steuerungseinrichtung bezüglich der jeweiligen Landessprache des Landes, in dem das Fahrzeug unterwegs ist, konfiguriert.

Wenn eine Person einem Kraftfahrzeug, beispielsweise einem Taxi, winkt, kann dies bedeuten, dass nur diese Person zusteigen möchte, dass also nur eine Person das Fahrzeug nutzen möchte. Denkbar ist es aber auch, dass mehrere Personen zusteigen möchten, wenngleich nur eine Person dem Kraftfahrzeug winkt. Um, sofern möglich, über die Anzahl der zusteigenden Personen Kenntnis zu erhalten, kann gemäß einer Weiterbildung der Erfindung über die Steuerungseinrichtung die Anzahl der Finger der die Handbewegung durchführenden Hand oder der zweiten im Bild gezeigten Hand der Person erfasst werden und als Information über die Anzahl der aufzunehmenden Passagiere verarbeitet werden. Denkbar ist es beispielsweise, dass die Person mit der rechten Hand die Handbewegung für die Mitfahrgeste durchführt, während die andere Hand beispielsweise mit drei abgespreizten Fingern gehoben ist. Die Steuerungseinrichtung kann nun die Fingeranzahl erfassen und daraus ableiten, dass insgesamt drei Personen zusteigen möchten.

Ist hierbei bei Erfassung einer Anzahl an aufzunehmenden Passagieren, die größer ist als die Anzahl der im Kraftfahrzeug vorhandenen freien Plätze, folglich das eigene Kraftfahrzeug nicht geeignet, den Mitfahrwunsch zu erfüllen, so kann automatisch ein Rufsignal an ein weiteres pilotiertes Kraftfahrzeug gesendet werden, welches Rufsignal die Positionskoordinaten für die automatische Anfahrt des weiteren Kraftfahrzeugs umfasst. Das Kraftfahrzeug selbst kann an die rufende Person beispielsweise eine optische Nachricht über ein Display ausgeben, dass es zur Erfüllung des Mitfahrwunschs nicht geeignet ist oder zur Verfügung steht. Hierüber kann auch mitgeteilt werden, dass bereits ein automatisches Rufsignal an ein anderes pilotiertes Kraftfahrzeug ausgesendet wurde, das in Kürze eintrifft, gegebenenfalls unter Angabe einer Information, wie lange es bis zum Eintreffen dauert.

Mitunter hat die eine Person oder haben die mehreren Personen auch Gepäckstücke dabei. Denkbar ist es nun, dass die Steuerungseinrichtung eine oder mehrere der Person zuzuordnende Gepäckstücke erfasst, wobei gegebenenfalls bei Erfassung wenigstens eines Gepäckstücks automatisch der Kofferraum des Kraftfahrzeugs geöffnet wird. Es erfolgt also auch hier wiederum eine Bildanalyse dahingehend, ob und wenn ja wie viele Gepäckstücke, beispielsweise größere Taschen oder Koffer, im Bild gezeigt sind, die benachbart zu der Person, die die Handbewegung durchführt, stehen. Hieraus kann nun abgeleitet werden, dass beispielsweise zwei zusätzliche Taschen oder Koffer aufzunehmen sind. Beim Erreichen der Anfahrendposition, wenn also das Kraftfahrzeug an seiner Zielposition nahe der winkenden Person angekommen ist, wird sodann, gegebenenfalls abhängig von der Größe des oder der Gepäckstücke, automatisch der Kofferraum des Kraftfahrzeugs geöffnet, so dass die Person die Gepäckstücke verladen kann. Alternativ kann eine Anfrage an die Person ausgegeben werden, ob der Kofferraum geöffnet werden soll. Eine Antwort, z. B. wieder durch eine Geste, kann erfasst und darauf entsprechend reagiert werden.

Grundsätzlich ist es denkbar, dass quasi ein Kraftfahrzeugrufsystem aufgebaut wird, an dem sich eine Person, die daran teilnehmen möchte, online anmelden kann. Diese Person lässt sich also für diesen Dienst registrieren und erhält beispielsweise einen von ihr zu tragenden Gegenstand, beispielsweise einen Schlüssel mit einem Chip oder eine entsprechende, auf das Mobiltelefon aufspielbare Applikation, der oder die der Identifikation der Person dient. Erfindungsgemäß kann nun über eine kraftfahrzeugseitige Erfassungseinrichtung ein von diesem von der Person getragenen Gegenstand gesendetes Personenidentifikationssignal erfasst werden. Dieses Signal kann beispielsweise kontinuierlich oder bei Betätigung eines Knopfes oder einer Taste oder dergleichen gesendet werden. Die Steuerungseinrichtung, der dieses Personenidentifikationssignal gegeben hat, kann nun über einen beispielsweise internen Datenabgleich feststellen, ob die Person registriert ist, also für den Dienst befugt ist, oder nicht. Falls ja kann angehalten werden, falls nein wird der Anhaltewunsch nicht bedient, was der Person gegebenenfalls auch angezeigt wird.

Dabei kann in Weiterbildung der Erfindung das erfasste Personenidentifikationssignal auch an eine externe Datenverarbeitungseinrichtung zur Identifikation und/oder zu Abrechnungszwecken und/oder zur Einholung von personenbezogenen Informationen, die von der Datenverarbeitungseinrichtung an die Erfassungseinrichtung übertragen werden, weitergeleitet werden. Demgemäß kann also die Identifikation oder Verifizierung seitens der externen Datenverarbeitungseinrichtung erfolgen, so dass quasi über die externe Datenverarbeitungseinrichtung sichergestellt wird, dass nur registrierte Personen den Dienst nutzen können. Zusätzlich kann hierüber auch eine Abrechnung erfolgen, beispielsweise über ein an der Datenverarbeitungseinrichtung hinterlegtes, der Person zuzuordnendes Konto. Gibt das Kraftfahrzeug über die Steuerungseinrichtung eine entsprechende Information, dass die Person auch tatsächlich zugestiegen ist, kann die Abrechnung erfolgen. Beispielsweise kann ein Pauschalbetrag abgerechnet werden, wenn die Fahrt zu einem Pauschalpreis erfolgt. Alternativ kann nach Beendigung der Fahrt auch ein entsprechendes Fahrtendesignal an die Datenverarbeitungseinrichtung gesandt werden, so dass dann die konkrete Strecke abgerechnet wird.

Alternativ oder zusätzlich können auch personenbezogene Informationen von der Datenverarbeitungseinrichtung abgefragt werden, also beispielsweise typische Fahrziele der Person, eine von der Person üblicherweise eingestellte Sitzposition oder andere personenbezogene Informationen, die für den Fahrbetrieb erforderlich sind.

Nicht immer ist es möglich, dass ein erfasster Mitfahrwunsch sofort bedient werden kann, beispielsweise wenn das Kraftfahrzeug an einer Ampel steht und erst auf die Grünphase warten muss. Denkbar ist es nun, dass über eine optische oder akustische Signalausgabeeinrichtung der Person signalisiert wird, ob das Kraftfahrzeug anhält, also dass der Anhaltewunsch erkannt wurde, und/oder wie lange es bis zum Anhalten dauert. Hierüber erhält die Person einerseits Informationen, dass ihr Mitfahrwunsch erfasst wurde, andererseits auch eine Information darüber, wie lange sie sich noch gedulden muss, bis das Kraftfahrzeug ungefähr ankommen wird. Die Signaleinrichtung kann am Fahrzeug selbst sein, z. B. kann hierzu die Frontbeleuchtung eingeschaltet werden oder ein Taxischild oder an einer Anzeigeeinrichtung eine Nachricht ausgegeben werden. Es kann aber auch eine Information an den von der Person getragenen Gegenstand, insbesondere ein Smartphone gesendet und dort das Signal ausgegeben werden.

Neben dem Verfahren selbst betrifft die Erfindung ferner ein Kraftfahrzeug, ausgebildet zum pilotierten Fahren, umfassend eine das Fahrzeugvorfeld aufnehmende Kameraeinrichtung mit zugeordneter Steuerungseinrichtung zum Auswerten der Bilder, ausgebildet zur Durchführung des beschriebenen Verfahrens.

Sämtliche Ausführungen betreffend das erfindungsgemäße Verfahren gelten gleichermaßen in Bezug auf das Kraftfahrzeug, das demgemäß ausgebildet ist.

Weitere Vorteile und Einzelheiten der Erfindung ergeben sich aus dem im folgenden beschriebenen Ausführungsbeispiel sowie anhand der Zeichnung. Dabei zeigen:
- Fig. 1: eine Prinzipdarstellung des erfindungsgemäßen Kraftfahrzeugs und weitere relevanter Einrichtungskomponenten, und
- Fig. 2: eine Prinzipdarstellung einer typischen Verkehrs- respektive Rufsituation.

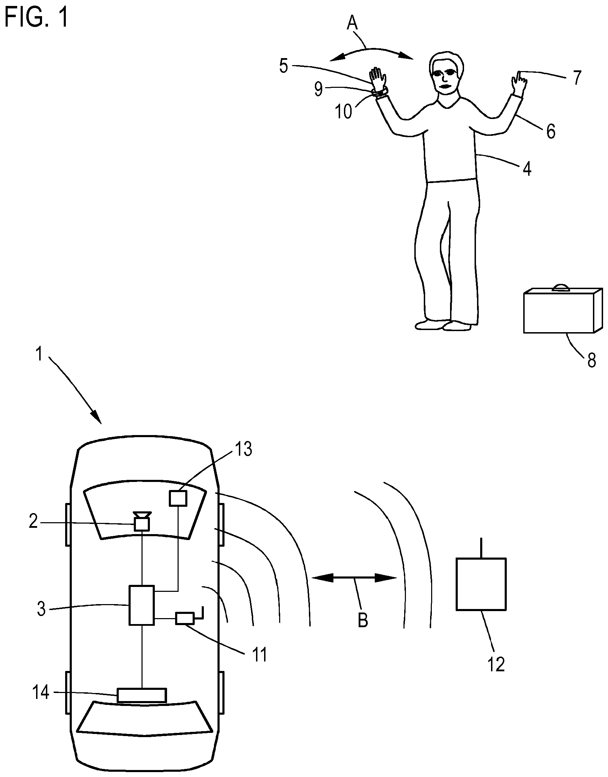

Fig. 1 zeigt eine Prinzipdarstellung eines erfindungsgemäßen Kraftfahrzeugs sowie einer relevanten Situation zur Erläuterung des erfindungsgemäßen Verfahrens.

Gezeigt ist ein erfindungsgemäßes Kraftfahrzeug 1, umfassend eine das Fahrzeugvorfeld aufnehmende Kameraeinrichtung 2 mit zugeordneter Steuerungseinrichtung 3, die zum Verarbeiten der Bilddaten der Kameraeinrichtung 2 dient.

Gezeigt ist des Weiteren eine Person 4, die mit der rechten Hand 5 eine quasi winkende Handbewegung macht, indem die Hand mehrfach von rechts nach links bewegt wird, wie durch den Doppelpfeil A angedeutet ist. Über diese Handbewegung soll dem Kraftfahrzeug 1, bei dem es sich beispielsweise um ein selbstfahrendes Taxi handelt, ohne oder mit Fahrer, signalisiert werden, dass die am Straßenrand stehende Person mitgenommen werden möchte. Das Winken ist folglich eine Geste, die einen Anhaltewunsch beschreibt.

Mit der linken Hand 6 zeigt die Person 4 an, dass nur eine Person mitgenommen werden soll. Dies wird durch den einen angehobenen Finger 7 dargestellt.

Die Kameraeinrichtung 2 nimmt nun Bilder vom Fahrzeugvorfeld einschließlich der Person 4 auf. Die Steuerungseinrichtung 3 analysiert nun die laufend eingehenden Bilder einerseits auf das Vorhandensein einer Person, das heißt, dass im vorliegenden Fall die Person 4 als solche erfasst wird. Darüber hinaus analysiert die Steuerungseinrichtung 3, ob die Person entsprechende Bewegungsmuster respektive Handbewegungen durchführt, die eine mögliche einen Anhaltewunsch anzeigende Geste beschreiben. Die Steuerungseinrichtung 3 erfasst hier das Winken der Hand 5. Die erfasste Handbewegung wird analysiert und beispielsweise mit vorab in einem Speicher abgelegten Vergleichsgesten oder Vergleichsbewegungen verglichen. Die Vergleichsgesten oder Vergleichsbewegungen können beispielsweise angelernt sein, sie können aber auch als vorhandener Datensatz abgelegt werden. Dieser Datensatz kann eine Vielzahl von lokal oder national üblichen Handbewegungen, die zum Rufen eines Taxis oder dergleichen verwendet werden, umfassen. Auch ist es denkbar, die Handbewegungen national zu gruppieren, das heißt, dass im europäischen Raum ein entsprechender Datensatz, der die typischen europäischen Handbewegungen beschreibt, abgespeichert wird, während für die USA ein diesbezüglich spezifischer Vergleichsdatensatz abgespeichert wird.

Des Weiteren ist die Steuerungseinrichtung 3 auch in der Lage, aus den Kamerabildern zu erfassen, in welche Richtung die Person 4 blickt. Beispielsweise kann ein festgestellter Anhaltewunsch als solcher über eine Blickrichtungserfassung verifiziert werden. Denn üblicherweise nimmt die Person 4 mit dem Kraftfahrzeug 1 Blickkontakt auf, wenn sie es erkennt und wenn sie ihm einen Anhaltewunsch signalisieren möchte. Schaut die Person 4 jedoch in eine völlig andere Richtung, führt sie aber dennoch die Handbewegung aus, so kann davon auszugehen sein, dass es sich bei der Handbewegung eher um eine zufällige Bewegung handelt, oder um eine Geste, die jemand anderem gilt oder Ähnliches. Das heißt, dass die Blickrichtungserfassung ebenfalls zur Verifizierung der Geste dienen kann, sofern die Blickrichtungserfassung im Einzelfall möglich ist.

Stellt die Steuerungseinrichtung 3 nun fest, dass es sich um eine, gegebenenfalls über die Blickrichtungserfassung verifizierte Handbewegung handelt, die einen Anhaltewunsch anzeigt, so kann gestützt auf diese Information das Kraftfahrzeug 1 gezielt über die Steuerungseinrichtung 3 zum Anhalten in der Nähe der Person gesteuert werden.

Gleichzeitig erfasst die Steuerungseinrichtung 3 aber auch den angehobenen Finger 7 der zweiten Hand 6 und leitet hieraus ab, dass nur diese Person mitfahren möchte, dass also keine weiteren Personen zusteigen wollen. Es wird in Abhängigkeit der erfassten Personenanzahl verglichen, ob die angegebene Personenanzahl ausreichend ist, um im Fahrzeug untergebracht zu werden, oder ob die Personenzahl die freien Plätze übersteigt. Im erstgenannten Fall hält das Kraftfahrzeug 1 in der Nähe der Person an, im zuletzt genannten Fall kann beispielsweise ein anderes Kraftfahrzeug automatisch über ein entsprechendes Rufsignal gerufen werden, das dann über die entsprechende Aufnahmekapazität verfügt. An die Person kann eine hierüber informierende Rückmeldung gegeben werden.

Des Weiteren besteht die Möglichkeit, über die Steuerungseinrichtung 3 aus den Kamerabildern auch zu erfassen, ob die Person 4 ein Gepäckstück 8 mit sich führt, das zu verstauen ist. Auch kann die Steuerungseinrichtung 3 zur Erfassung der Gepäckgröße ausgelegt sein. Ergibt sich, dass die Person 4 beispielsweise nur eine kleine Tasche mit sich führt, die ohne weiteres im Fahrzeug untergebracht werden kann, so wird dies registriert, eine spezifische Handlung erfolgt jedoch nicht. Ergibt sich jedoch, dass es sich bei dem Gepäckstück 8 um einen größeren Koffer handelt, so kann automatisch beispielsweise der Kofferraum des Kraftfahrzeugs geöffnet werden, damit die Person 4 das Gepäckstück 8 verstauen kann. Ist das Gepäckstück nicht im Kofferraum verstaubar, wird der Person angezeigt, das Gepäckstück im Inneren des Fahrzeugs zu verstauen. Ein gegebenenfalls geöffneter Kofferraum wird automatisch bei Fahrtbeginn geschlossen.

Wie die Fig. 1 zeigt, trägt die Person 4 einen Gegenstand 9 hier in Form eines Armbands, an dem eine Sende- oder Transpondereinrichtung 10 angeordnet ist. Die Steuerungseinrichtung 3 kommuniziert mit einer Sende- und Empfangseinrichtung 11, die in der Lage ist, ein über die Sende- oder Transpondereinrichtung 10 gesendetes Personenidentifikationssignal zu erfassen. Das Personenidentifikationssignal kann beispielsweise den Namen der Person oder besondere Fahrwünsche oder dergleichen umfassen. Natürlich kann das Personenidentifikationssignal auch einen Personencode umfassen, so dass keine Klarnamen übertragen werden.

Die Steuerungseinrichtung 3 kann nun beispielsweise über einen internen Speicher, wo entsprechende Vergleichsdaten abgelegt sind, entsprechende Informationen zu dieser Person, gestützt auf das Personenidentifikationssignal erfassen. Alternativ besteht die Möglichkeit, dass die Steuerungseinrichtung 3 über die Sende- und Empfangseinrichtung 11 das Personenidentifikationssignal an eine externe Datenverarbeitungseinrichtung 12 überträgt, wie durch den Doppelpfeil B dargestellt ist. Dort sind entsprechende Informationen zu der Person, die über das Personenidentifikationssignal identifiziert wird, abgelegt. Es handelt sich um eine bidirektionale Kommunikation, das heißt, dass von der Datenverarbeitungseinrichtung 12 auch entsprechende Informationen wieder zurück an die Sende- und Empfangseinrichtung 11 übertragen werden, die sodann seitens der Steuerungseinrichtung 3 verarbeitet werden. Über dieses Personenidentifikationssignal kann beispielsweise erfasst werden, ob die Person 4 berechtigt ist, den Fahrdienst überhaupt in Anspruch zu nehmen. Dies ist beispielsweise dann der Fall, wenn es sich hierbei um ein System handelt, bei dem man sich als Teilnehmer anmelden muss. Nur wenn die Person 4 als ein angemeldeter Teilnehmen identifiziert wird, kann beispielsweise der automatische Anfahrbetrieb überhaupt erfolgen. Zusätzlich oder alternativ könnte die Person auch über ein fahrzeugseitiges Kamerasystem identifiziert werden. Auch kann die Datenverarbeitungseinrichtung 12 nach erfasster Identifikation automatisch die anstehende Fahrt abrechnen, wenn klar ist, dass die Person 4 die Fahrt auch tatsächlich durchgeführt hat und Ähnliches.

Nach erfolgter Erfassung des Mitfahrwunschs und getroffener Entscheidung, dass der Mitfahrwunsch bearbeitet wird und das Kraftfahrzeug 1 die Person 4 aufnehmen wird, kann beispielsweise über eine frontseitige Anzeigeeinrichtung 13 der Person 4 signalisiert werden, dass der Anhaltewunsch erfasst wurde und sich das Fahrzeug nähert. Gegebenenfalls kann hierüber auch eine Information, wie lange es noch dauern wird, bis das Kraftfahrzeug 1 bei der Person ist, ausgegeben werden. Für den Fall, dass der Mitfahrwunsch nicht bedient werden kann, kann auch eine Information ausgegeben werden, dass sich das Kraftfahrzeug 1 nicht nähern wird.

Sobald sämtliche Auswertungen erfolgt sind und klar ist, dass das Kraftfahrzeug die Person 4 aufnehmen wird, steuert die Steuerungseinrichtung 3 eine entsprechende Antriebseinrichtung 14 des Kraftfahrzeugs an, woraufhin dieses sich automatisch in Bewegung setzt und zu der Person 4 fährt, um diese aufzunehmen.

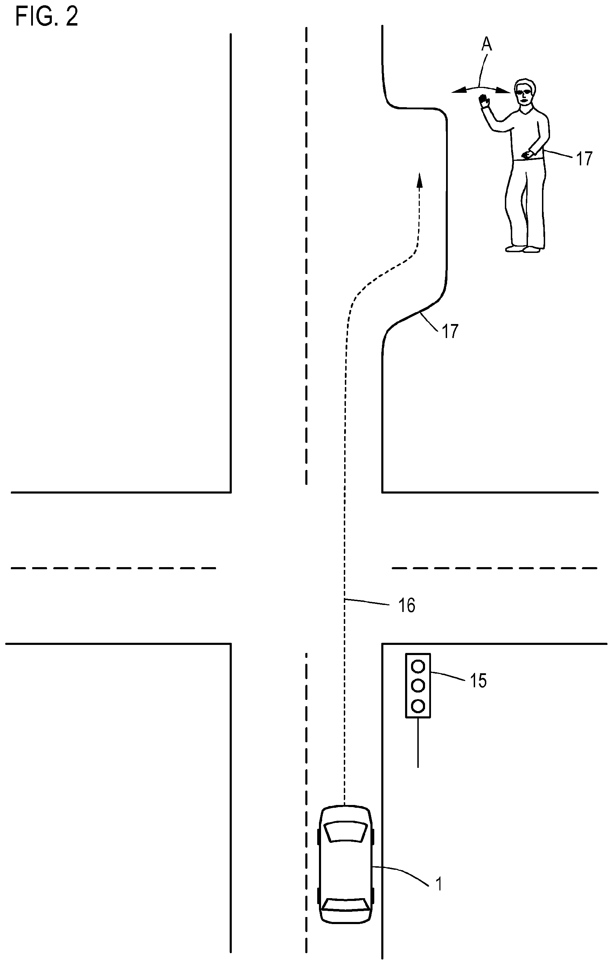

Fig. 2 zeigt eine typische Situation an, bei der die Person 4 hinter einer Kreuzung steht, während das Kraftfahrzeug 1 vor der Kreuzung an einer Ampel 15 steht, die beispielsweise Rotlicht zeigt. Die Person 4 hat das Kraftfahrzeug 1 als ein Taxi erkannt, das sie also grundsätzlich aufnehmen könnte. Hierzu kann das Kraftfahrzeug 1 natürlich über eine entsprechende Taxi-Kennzeichnung oder dergleichen verfügen.

Die Person 4 winkt nun, wie durch den Doppelpfeil A dargestellt ist, mit einer entsprechenden, den Mitfahrwunsch anzeigenden Handbewegung, das Kraftfahrzeug 1 erfasst diese und trifft die Entscheidung, dass die Person 4 aufgenommen wird.

Sobald die Ampel 5 auf Grün springt, setzt sich das Kraftfahrzeug 1 entsprechend der gestrichelt gezeigten Spur 16 in Bewegung und fährt in Richtung der Person 4, die beispielsweise an einer Parkbucht 17 steht. Das selbsttätig, also autonom fahrende Kraftfahrzeug 1 steuert sodann automatisch in die Parkbucht 17 und hält benachbart zur Person 4 an, so dass diese zusteigen kann.

Sobald klar ist, wohin die Fahrt gehen soll, setzt sich das Kraftfahrzeug 1 mit der Person in Bewegung und führt den Transport durch. Am Ziel angekommen kann beispielsweise die Sende- und Empfangseinrichtung 11 ein Signal an die externe Datenverarbeitungseinrichtung 12 geben, dass die Fahrt erfolgreich beendet wurde, woraufhin dortseits die Abrechnung erfolgen kann. Selbstverständlich kann natürlich auch im Kraftfahrzeug 1 selbst gezahlt werden, wenn dort eine entsprechende automatische Zahlvorrichtung vorgesehen ist.

Im gezeigten Beispiel trägt die Person 4 ein Armband mit der Sendeeinrichtung 10. Alternativ kann es sich hierbei auch um einen Schlüssel mit einem Chip handeln oder um eine Applikation, die auf das Mobiltelefon der Person 4 geladen ist. Im letztgenannten Fall kann die Person mit der Hand 5 winken und sich entweder vorher oder nachher über die Applikation des Mobiltelefons quasi an der externen Datenverarbeitungseinrichtung 12 oder über die Sende- und Empfangseinrichtung 11 an der Steuerungseinrichtung 3 identifizieren. Auch über diese Applikation können sodann etwaige Zahlungsinformationen bereits vor dem Einsteigen kommuniziert werden, oder typische Fahrziele oder weitere Personalisierungsmaßnahmen wie Sitzposition, freigeschaltete Dienstleistungen und Services etc. Dadurch muss sich die Person nicht erst nach dem Einsteigen registrieren oder ein Ziel eingeben, wenn ein solches gegebenenfalls bereits hierüber erfasst werden kann. Zudem ermöglicht eine Identifikation des potentiellen Mitfahrers vor dem Anhalten in Kombination mit der Geste bereits eine Vorauswahl aus verschiedenen, unterschiedlich teuren Servicekategorien dem potentiellen Mitfahrer anzubieten, beispielsweise wenn der Mitfahrer eine bestimmte Fahrzeugkategorie wünscht. Handelt es sich bei dem Kraftfahrzeug 1 um die gewünschte Fahrzeugkategorie, so kann der Mitfahrwunsch erfüllt werden. Falls nicht, kann über die Sende- und Empfangseinrichtung 11 ein entsprechendes Rufsignal an ein anderes, in der Nähe befindliches Kraftfahrzeug geschickt werden, das der Kategorie entspricht. Auch dies kann der Person 4 über die Anzeigeeinrichtung 13 sodann kund getan werden, gegebenenfalls aber auch über eine entsprechende Nachricht, die an das Mobiltelefon geschickt wird oder dergleichen. Hier sind beliebige Kommunikationsmöglichkeiten denkbar.

Obiges Beispiel geht von einem vollständig autonom fahrenden Fahrzeug aus. Handelt es sich jedoch um ein Fahrzeug, das nur teilautonom oder auch vollständig autonom, jedoch zwingend mit anwesendem Fahrer fährt, so kann das erfindungsgemäße Verfahren respektive das System gleichermaßen angewendet werden. Anders als beim beschriebenen Beispiel erfolgt in diesem Fall nach Erfassen eines Mitfahrwunschs eine Anzeige über eine geeignete Anzeigeeinrichtung, die an den Fahrer gerichtet ist, und ihn auf die Person 4 aufmerksam macht. Denn es kann sein, dass insbesondere bei höherem Verkehrsaufkommen der Fahrer die am Straßenrand stehende, winkende Person übersieht. Nach Signalisierung an den Fahrer kann der Fahrer sodann selbst das Kraftfahrzeug 1 zur Person 4 bewegen, wenn er selber fahren muss, oder das Kraftfahrzeug 1 fährt auch in diesem Fall weitgehend autonom, jedoch mit zusätzlicher Information des Fahrers.

## Patentansprüche

1. Verfahren zum Betrieb eines Kraftfahrzeugs (1) umfassend eine das Fahrzeugvorfeld aufnehmende Kameraeinrichtung (2) mit zugeordneter Steuerungseinrichtung (3) zum Auswerten der Bilder, wobei die Steuerungseinrichtung (3) die Bilder zum Erfassen wenigstens einer von einer in den Bildern gezeigten Person (4) durchgeführten Handbewegung auswertet, **dadurch gekennzeichnet, dass** die Handbewegung signalisiert, dass die Person (4) von dem Kraftfahrzeug (1) mitgenommen werden möchte, wobei bei Erfassen einer Handbewegung, die eine einen Mitfahrerwunsch anzeigende Geste beschreibt, das selbstfahrende Kraftfahrzeug (1) zum Anhalten in die Nähe der Person gesteuert wird, so dass die Person (4) einsteigen kann.

2. Verfahren nach Anspruch 1,
**dadurch gekennzeichnet,**
**dass** einem Fahrer des Kraftfahrzeugs (1) ein den Mitfahrerwunsch signalisierendes Signal gegeben wird.

3. Verfahren nach Anspruch 1 oder 2,
**dadurch gekennzeichnet,**
**dass** die Steuerungseinrichtung (3) ferner die Bilder zum Erfassen der Blickrichtung der Person (4) auswertet, wobei das Kraftfahrzeug (1) zum Anhalten in der Nähe der Person (4) gesteuert wird, wenn die Blickrichtung einer definierten Blickrichtung entspricht.

4. Verfahren nach einem der vorangehenden Ansprüche,
**dadurch gekennzeichnet,**
**dass** über die Steuerungseinrichtung (3) die erfasste Handbewegung klassifiziert wird, wobei die Handbewegung in Abhängigkeit der Klassifizierung berücksichtigt oder verworfen wird.

5. Verfahren nach einem der vorangehenden Ansprüche,
**dadurch gekennzeichnet,**
**dass** über ein kraftfahrzeugseitiges Mikrofon Ruf- oder Pfeifgeräusche der Person (4) erfasst und seitens der Steuerungseinrichtung (3) ausgewertet werden und bei der Steuerung des Fahrzeugbetriebs berücksichtigt werden.

6. Verfahren nach einem der vorangehenden Ansprüche,
**dadurch gekennzeichnet,**
**dass** über die Steuerungseinrichtung (3) die Anzahl der Finger (7) der die Handbewegung durchführenden Hand (5) oder der zweiten im Bild gezeigten Hand (6) der Person (4) erfasst und als Information über die Anzahl der aufzunehmenden Passagiere verarbeitet wird.

7. Verfahren nach Anspruch 6,
**dadurch gekennzeichnet,**
**dass** bei Erfassung einer Anzahl an aufzunehmenden Passagieren, die größer ist als die Anzahl der im Kraftfahrzeug (1) vorhandenen freien Plätze, automatisch ein Rufsignal an ein weiteres pilotiertes Kraftfahrzeug gesendet wird, welches Rufsignal die Positionskoordinaten für die automatische Anfahrt des weiteren Kraftfahrzeugs umfasst.

8. Verfahren nach einem der vorangehenden Ansprüche,
**dadurch gekennzeichnet,**
**dass** die Steuerungseinrichtung (6) ein oder mehrere der Person (4) zuzuordnende Gepäckstücke (8) erfasst, wobei gegebenenfalls bei Erfassung wenigstens eines Gepäckstücks (8) automatisch der Kofferraum des Kraftfahrzeugs (1) geöffnet wird.

9. Verfahren nach einem der vorangehenden Ansprüche,
**dadurch gekennzeichnet,**
**dass** über eine kraftfahrzeugseitige Erfassungseinrichtung (11) ein von einem von der Person getragenen Gegenstand gesendetes Personenidentifikationssignal erfasst wird.

10. Verfahren nach Anspruch 9,
**dadurch gekennzeichnet,**
**dass** das erfasste Personenidentifikationssignal an eine externe Datenverarbeitungseinrichtung (12) zur Identifikation und/oder zu Abrechnungszwecken und/oder zur Einholung von personenbezogenen Informationen, die von der Datenverarbeitungseinrichtung an die Erfassungseinrichtung übertragen werden, weitergeleitet wird.

11. Verfahren nach einem der vorangehenden Ansprüche,
**dadurch gekennzeichnet,**
**dass** über eine optische oder akustische Signalausgabeeinrichtung (13) der Person (4) signalisiert wird, ob das Kraftfahrzeug (1) anhält und/oder wie lange es bis zum Anhalten dauert.

12. Kraftfahrzeug (1) ausgebildet zum pilotierten Fahren, umfassend eine das Fahrzeugvorfeld aufnehmende Kameraeinrichtung (2) mit zugeordneter Steuerungseinrichtung (3) zum Auswerten der Bilder, **dadurch gekennzeichnet, dass** sie ausgebildet ist zur Durchführung des Verfahrens nach einem der vorangehenden Ansprüche.

## Claims

1. Method for operating a motor vehicle (1) comprising a camera apparatus (2) which records images of the area ahead of the vehicle, which camera apparatus has an associated control apparatus (3) for evaluating the images, wherein the control apparatus (3) evaluates the images to detect at least one hand motion performed by a person (4) shown in the images, **characterised in that** the hand motion signals that the person (4) would like to be picked up by the motor vehicle (1), wherein, when a hand motion which describes a gesture indicating a stopping request is detected, the self-driving motor vehicle (1) is controlled to stop in the vicinity of the person so that the person (4) can enter the vehicle.

2. Method according to claim 1,
**characterised in**
**that** the driver of the motor vehicle (1) is given a signal signalling the stopping request.

3. Method according to claim 1 or 2,
**characterised in**
**that** the control apparatus (3) further evaluates the images to detect the viewing direction of the person (4), wherein the motor vehicle (1) is controlled to stop in the vicinity of the person (4) when the viewing direction corresponds to a defined viewing direction.

4. Method according to any of the preceding claims,
**characterised in**
**that** the hand motion is classified by the control apparatus (3), wherein the hand motion is considered or dismissed depending upon the classification.

5. Method according to any of the preceding claims,
**characterised in**
**that** calling or whistling sounds made by the person (4) are detected by a microphone on board the motor vehicle and evaluated by the control apparatus (3) and considered in the control of the vehicle operation.

6. Method according to any of the preceding claims,
**characterised in**
**that** the number of fingers (7) raised on the hand (5) performing the hand motion or on the second hand (6) of the person (4) shown in the image is detected by the control apparatus (3) and processed as information about the number of passengers to be picked up.

7. Method according to claim 6,
**characterised in**
**that** when the detected number of passengers to be picked up is greater than the number of free seats available in the motor vehicle (1), a call signal is automatically sent to a further piloted motor vehicle, which call signal comprises the position coordinates for the automatic approach of the further motor vehicle.

8. Method according to any of the preceding claims,
**characterised in**
**that** the control apparatus (6) detects one or more items of luggage (8) to be associated with the person (4), wherein the boot of the motor vehicle (1) is automatically opened if necessary when at least one item of luggage (8) is detected.

9. Method according to any of the preceding claims,
**characterised in**
**that** a personal identification signal sent by an object carried by the person is detected by a detection apparatus (11) on board the motor vehicle.

10. Method according to claim 9,
**characterised in**
**that** the detected personal identification signal is relayed to an external data processing system (12) for identification and/or for billing purposes and/or to obtain personal information, which is transmitted by the data processing system to the detection apparatus.

11. Method according to any of the preceding claims,
**characterised in**
**that** the person (4) is signalled by a visual or acoustic signal output apparatus (13) regarding whether the motor vehicle (1) will stop and/or how long the motor vehicle will take until it stops.

12. Motor vehicle (1) designed for piloted driving, comprising a camera apparatus (2) which records images of the area ahead of the vehicle, which camera apparatus has an associated control apparatus (3) for evaluating the images, **characterised in that** said motor vehicle is designed to perform the method according to any of the preceding claims.

## Revendications

1. Procédé pour faire fonctionner un véhicule automobile (1) comprenant un dispositif de caméra (2) enregistrant la zone devant le véhicule avec un dispositif de commande (3) associé pour évaluer les images, dans lequel le dispositif de commande (3) évalue les images pour détecter au moins un mouvement de la main effectué par une personne (4) représentée sur les images, **caractérisé en ce que** le mouvement de la main signale que la personne (4) souhaite monter à bord du véhicule automobile (1), dans lequel, lors de la détection d'un mouvement de la main décrivant un geste indiquant un souhait de montée à bord, le véhicule automobile autonome (1) est commandé pour s'arrêter à proximité de la personne afin que la personne (4) puisse monter à bord.

2. Procédé selon la revendication 1,
**caractérisé en ce**
**qu'**un conducteur du véhicule automobile (1) reçoit un signal indiquant le souhait de montée à bord.

3. Procédé selon la revendication 1 ou 2,
**caractérisé en ce**
**que** le dispositif de commande (3) évalue en outre les images pour détecter la direction du regard de la personne (4), dans lequel le véhicule automobile (1) est commandé pour s'arrêter à proximité de la personne (4) lorsque la direction du regard correspond à une direction du regard définie.

4. Procédé selon l'une quelconque des revendications précédentes,
**caractérisé en ce**
**que** le mouvement de la main détecté est classé par le dispositif de commande (3), dans lequel le mouvement de la main est pris en compte ou rejeté en fonction de la classification.

5. Procédé selon l'une quelconque des revendications précédentes,
**caractérisé en ce**
**que** les bruits d'appel ou de sifflement de la personne (4) sont enregistrés par l'intermédiaire d'un microphone côté véhicule automobile et sont évalués par le dispositif de commande (3) et pris en compte dans la commande de fonctionnement du véhicule.

6. Procédé selon l'une quelconque des revendications précédentes,
**caractérisé en ce**
**que** le nombre de doigts (7) de la main (5) effectuant le mouvement de la main ou de la seconde main (6) de la personne (4) représentée sur l'image est détecté par le dispositif de commande (3) et traité comme une information sur le nombre de passagers à faire monter à bord.

7. Procédé selon la revendication 6,
**caractérisé en ce**
**que**, lors de la détection d'un nombre de passagers à faire monter à bord supérieur au nombre de places libres dans le véhicule automobile (1), un signal d'appel est automatiquement envoyé à un autre véhicule automobile piloté, lequel signal d'appel comprend les coordonnées de position pour l'approche automatique de l'autre véhicule automobile.

8. Procédé selon l'une quelconque des revendications précédentes,
**caractérisé en ce**
**que** le dispositif de commande (6) détecte un ou plusieurs bagages (8) à attribuer à la personne (4), dans lequel le coffre du véhicule automobile (1) est automatiquement ouvert le cas échéant lorsqu'au moins un bagage (8) est détecté.

9. Procédé selon l'une quelconque des revendications précédentes,
**caractérisé en ce**
**qu'**un signal d'identification personnel envoyé par un objet porté par la personne est détecté par un dispositif de détection (11) côté véhicule automobile.

10. Procédé selon la revendication 9,
**caractérisé en ce**
**que** le signal d'identification personnel détecté est transmis à un dispositif externe de traitement de données (12) à des fins d'identification et/ou de comptabilité et/ou d'obtention d'informations personnelles qui sont attribuées par le dispositif de traitement de données au dispositif de détection.

11. Procédé selon l'une quelconque des revendications précédentes,
**caractérisé en ce**
**qu'**un dispositif d'émission de signal optique ou acoustique (13) signale à la personne (4) si le véhicule automobile (1) s'arrête et/ou combien de temps il met pour s'arrêter.

12. Véhicule automobile (1) conçu pour la conduite pilotée, comprenant un dispositif de caméra (2) enregistrant la zone devant le véhicule avec un dispositif de commande associé (3) pour l'évaluation des images, **caractérisé en ce qu'**il est conçu pour mettre en œuvre le procédé selon l'une quelconque des revendications précédentes.
